Europäisches Patentamt

(19) European Patent Office

Office européen des brevets

(11) Numéro de publication: **0 077 592**
**A1**

(12) **DEMANDE DE BREVET EUROPEEN**

(21) Numéro de dépôt: 82201294.4

(51) Int. Cl.³: **A 01 N 61/00**

(22) Date de dépôt: 18.10.82

(30) Priorité: 21.10.81 BE 2059426

(43) Date de publication de la demande:
27.04.83 Bulletin 83/17

(84) Etats contractants désignés:
DE FR GB IT NL

(71) Demandeur: De Troyer, Paul
Rue Raymond Leblaux 113
B-1428 Lillois(BE)

(72) Inventeur: De Troyer, Paul
Rue Raymond Leblaux 113
B-1428 Lillois(BE)

(74) Mandataire: Bockstael, Daniel
M.F.J. Bockstael Arenbergstraat 13
B-2000 Anvers(BE)

(54) Procédé de traitement préventif et/ou curatif de plantes et composition pour l'application de ce procédé.

(57) Procédé de traitement préventif et/ou curatif de plantes contre les attaques de germes de Pythium et/ou Phytophora, caractérisé en ce qu'il consiste à traiter les plantes par trempage et/ou arrosage et/ou pulvérisation à l'aide d'une solution permettant la transformation de l'acide homogen.

EP 0 077 592 A1

Croydon Printing Company Ltd

1

"Procédé de traitement préventif et/ou curatif de plantes et composition pour l'application de ce procédé"

La présente invention concerne un procédé de traitement préventif et/ou curatif de plantes, plus particulièrement contre les attaques par les germes de champignons susceptibles de former de l'acide homogentisique en symbiose avec les plantes, tel le Pythium et/ou Phytophora. L'invention concerne également une composition pour l'application de ce procédé.

On sait que les Phytium et Phytophora sont de champignons dont les germes pénètrent dans la plante par les poils absorbants des racines. Ils produisent alors, en symbiose avec la plante, et par une réaction dite L-aminoacide-aromatique-décarboxylase, une toxine qui est en l'occurrence l'acide homogentisique. Mis en présence de l'air, par exemple suite à une blessure de la plante, ce dernier s'oxyde et entraîne la décarboxylation de l'histidine, de la phénylalanine, de la tyrosine, du tryptophane, de la cystéine et la dénaturation des tissus par la réduction des enzymes porteurs de SH en pont disulfure S-S. Les tissus s'asphyxient, entraînant le plus souvent la mort de la plante.

Jusqu'à présent, les moyens de lutte préconisés pour lutter contre les effets susmentionnés ont essentiellement été du type préventif. Ils font en effet appel à des fongicides, dont l'unique fonction est de détruire les champignons avant qu'ils n'aient pu faire de dégats, respectivement des dégats trop importants.

Le but de l'invention est de fournir un procédé de traitement préventif et/ou curatif, caractérisé en ce qu'il consiste à traiter les plantes par trempage et/ou arrosage et/ou pulvérisation à l'aide d'une solution permettant la transformation de l'acide homogentisique en acide citrique.

A remarquer que, du point de vue purement chimique, ladite transformation est connue sous le nom de cycle de Krebs.

Exemple.
On a traité des Pelagornium attaqués (plante particulièrement sensible aux pythium et phytophtora à l'aide d'une solution contenant 2 SH (soit 66,6%) + 1 acide ascorbique (soit 33,3%) ou 2 SHCl (soit 66,6%) + 1 acide ascorbique (soit 33,3%).

Le traitement a été successivement effectué par trempage des boutures, par arrosage des plantes et par pulvérisation.

Après un certain temps de 8 à 10 jours on a constaté que :

- la production de la chlorophylle dans la plante rédevient normale;
- les tissus de la plante reprennent leur structure;
- lors de la coupe des boutures sur les pieds mères ainsi que sur la bouture proprement dite, la plaie prend une forme convexe - contrairement à une forme concave sur plantes malades -;
- la grandeur et la couleur des feuilles et des fleurs deviennent parfaite;
- l'enracinement de boutures, issues de plantes guéries, piquées dans un terreau infecté de pythium, se fait sans difficultés;
- le rendement de la production de la plante augmente;
- la rémanence du produit est de l'ordre de trois mois;

- l'emploi du produit n'entrave pas la croissance des plantes;
- le SH Cl provoque, par l'oxydation de la maladie, l'acétylation des acides aminés donnant pour aspect des meilleurs ramifications;

Il est évident que de nombreuses variantes peuvent être apportées à l'exemple susdécrit sans pour cela sortir du cadre de l'invention.

Revendications.

1.- Procédé de traitement préventif et/ou curatif de plantes contre les attaques de germes de Pythium et/ou Phytophora, caractérisé en ce qu'il consiste à traiter les plantes par trempage et/ou arrosage et/ou pulvérisation à l'aide d'une solution permettant la transformation de l'acide homogentisique en acide citrique.

2.- Procédé selon la revendication 1, caractérisé en ce que ladite solution contient du SH, au moins une vitamine et des ions ferreux.

3.- Procédé selon la revendication 2, caractérisé en ce que ladite vitamine est l'acide ascorbique.

4.- Composition obtenue à l'aide du procédé selon les revendications 1 à 3, caractérisée en ce qu'elle contient du SHCl, de l'acide ascorbique et des ions ferreux.

5.- Composition obtenue à l'aide du procédé selon les revendications 1 à 3, caractérisée en ce qu'elle contient du SH et de l'acide ascorbique.

6.- Composition obtenue à l'aide du procédé selon les revendications 1 à 3, caractérisée en ce qu'elle contient du SHCl et de l'acide ascorbique.

7.- A titre de produit industriel nouveau, toute composition destinée à l'application du procédé selon les revendications 1 à 6, respectivement tout mélange permettant l'obtention de ladite solution.

Office européen
des brevets

**RAPPORT DE RECHERCHE EUROPEENNE**

**0077592**
Numéro de la demande

EP 82 20 1294

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | A 01 N 61/00 |
| X | WO-A-7 900 838 (M.J.SAMPSON) *Revendications 9,10,12; page 8, ligne 33 - page 9, ligne 33; page 12, exemple VI* | 5-7 | |
| | --- | | |
| A | CHEMICAL ABSTRACTS, vol. 45, no. 1, 10 janvier 1951, col. 216c, Columbus Ohio (USA); L.M.UTKIN: "Homogentisic acid in the metabolism fo molds". & BIOKHIMIYA 15, 330-3(1950). *Résumé* | 1-7 | |
| | --- | | |
| A | CHEMICAL ABSTRACTS; vol. 48, no. 1, 10 janvier 1954, col. 777b, Columbus Ohio (USA); B.SCHEPARTZ et al.: "Inhibition and activation of the oxidation of ·homogentisic acid". & J. BIOL: CHEM. 205, 185-92(1953). *Résumé* | 1-7 | DOMAINES TECHNIQUES RECHERCHES (Int. Cl. ³) A 01 N |
| | --- | | |
| A | US-A-3 973 032 (C.D.LEONARD) | 3 | |
| | ----- | | |

Le présent rapport de recherche a été établi pour toutes les revendications

| Lieu de la recherche | Date d'achèvement de la recherche | Examinateur |
|---|---|---|
| LA HAYE | 01-02-1983 | DECORTE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82